# FASCICULE DE BREVET EUROPEEN

(11) **EP 3 626 590 B1**
(45) Date de publication et mention de la délivrance du brevet: **22.02.2023**
(21) Numéro de dépôt: 19197330.4
(22) Date de dépôt: 13.09.2019
(51) Int. Cl.: B62D 43/10, B62D 21/15, B62D 29/04, B62D 25/20, B60K 15/063

(54) **VÉHICULE AUTOMOBILE COMPRENANT UNE BARRIÈRE DE PROTECTION D'UN RESERVOIR A CARBURANT**
KRAFTFAHRZEUG MIT EINER SCHUTZBARRIERE EINES TANKES
MOTOR VEHICLE COMPRISING A PROTECTIVE BARRIER OF A FUEL TANK

(30) Priorité: 21.09.2018 FR 1871071
(43) Date de publication de la demande: 25.03.2020
(73) Titulaire: Renault s.a.s, 92100 Boulogne Billancourt (FR)
(72) Inventeur: MIOT, David, 35420 LOUVIGNE DU DESERT (FR); VINIAL, CHRISTOPHE, 91220 LE PLESSIS PATE (FR)
(74) Mandataire: Renault Group

(56) Documents cités:
- WO-A1-2008/049494
- JP-A- 2016 203 736
- US-A1- 2002 185 881
- US-A1- 2009 195 030
- US-A1- 2011 227 367
- US-A1- 2017 210 217
- US-A1- 2018 050 734

## Description

La présente invention concerne un véhicule automobile comprenant un soubassement pourvu d'un plancher arrière sur lequel peut être reçue une roue de secours, le véhicule comprenant également un réservoir à carburant situé à l'avant du plancher arrière.

Sur de nombreux véhicules automobiles connus, une roue de secours est classiquement située dans un logement formé sur le plancher arrière, la roue étant située au-dessus de ce plancher. Cependant elles sont généralement inclinées vers l'avant du véhicule, c'est-à-dire ont une partie avant plus basse que leur partie arrière, et sont généralement en position basse, aux limites de la garde au sol du véhicule. Le but est d'assurer l'intégrité du réservoir à carburant pour satisfaire les objectifs réglementaires en situation de choc arrière. En effet le réservoir est souvent situé à l'avant de la roue de secours, si l'on considère la direction longitudinale avant-arrière du véhicule et ne doit pas être contraint pas l'avancée de la roue de secours lors d'un choc subi à l'arrière du véhicule, qui tend à repousser tous les éléments vers l'avant.

Lors d'un choc arrière sur les véhicules connus de ce type, la roue de secours passe alors sous la partie arrière du réservoir et vient ensuite buter sur la traverse de train arrière. L'intégrité sécuritaire du réservoir à carburant est donc préservée.

Mais de nouvelles situations et contraintes d'architectures imposent de disposer la roue de secours ou une galette équivalente à un niveau plus haut, et à l'horizontale, ce qui a de fait une incidence critique sur le réservoir à carburant lors d'un choc arrière. En effet, lors d'un choc arrière, la roue se déplace en vis à vis direct de la partie arrière du réservoir à carburant et d'une traverse de soubassement. Ainsi cette dernière tend à dévier la roue et à la renvoyer vers la zone réservoir.

Le document JP 2016 203736 A, sur lequel est basé le préambule de la revendication 1, décrit un véhicule automobile comprenant un soubassement pourvu d'un plancher, le véhicule comprenant un réservoir à carburant situé à l'avant du plancher arrière, où une roue de secours est disposée au-dessus du plancher arrière à une hauteur présentant une zone de recouvrement avec la hauteur du réservoir, le véhicule comprenant également une barrière de protection fixée sur la structure du soubassement et sur le plancher arrière, et au moins en partie intercalée entre la roue de secours et l'arrière du réservoir à carburant. Les documents US 2009/195030 A1 et US 2002/185881 A1 décrivent également des dispositifs optimisés d'occupation de l'espace dans la partie arrière d'un véhicule.

L'invention a pour but de pallier tout ou partie des inconvénients précédents en proposant un véhicule automobile ayant un soubassement pourvu d'un plancher arrière adapté à recevoir une roue de secours surélevée par rapport à une hauteur conventionnelle, sans impacter dangereusement le réservoir à carburant disposé au-devant de cette roue de secours.

A cet effet, l'invention a pour objet un véhicule automobile comprenant un soubassement pourvu d'un plancher arrière, le véhicule comprenant également un réservoir à carburant situé à l'avant du plancher arrière, caractérisé en ce qu'une roue de secours est disposée au-dessus plancher arrière à une hauteur présentant une zone de recouvrement avec la hauteur d'une zone arrière du réservoir, le véhicule comprenant une barrière de protection fixée sur la structure du soubassement et sur le plancher arrière et au moins en partie intercalée entre la roue de secours et la zone arrière du réservoir à carburant.

Du fait de la configuration d'implantation d'une batterie de servitude de type 12v ou équivalent présente sur le plancher arrière et en présence d'une roue de secours disposée au-dessus de cette batterie, dans une position horizontale et relativement haute, un véhicule selon l'invention satisfait les exigences de sécurité en protégeant efficacement le réservoir à carburant contre toute avancée de la roue de secours en cas de choc arrière du véhicule.

La roue de secours est disposée sensiblement à l'horizontale au-dessus d'un organe fonctionnel du véhicule, notamment une batterie de servitude de type 12v ou équivalente, reposant sur une face supérieure du plancher arrière.

Le plancher arrière est constitué d'une coque en matériau plastique ou composite, notamment de type SMC (en anglais « Sheet Molding Compound ») supportée latéralement par deux longerons arrière latéraux du soubassement, lesquels s'étendent suivant la direction sensiblement longitudinale du véhicule, la coque étant également supportée à l'avant par une traverse centrale de soubassement, s'étendant suivant la direction transversale du véhicule.

La coque comprenant un renfoncement central ayant la forme générale d'une cuvette dans laquelle est logée la batterie.

La barrière de protection est réalisée en tubes métalliques mécano-soudés, et comprend une barre avant ainsi qu'une barre arrière s'étendant chacune essentiellement suivant la direction transversale du véhicule, la barre avant prenant appui sur la traverse centrale de soubassement, tandis que la barre arrière pénètre au moins en partie dans le renfoncement et épouse une paroi avant de ce dernier, la barre avant et la barre arrière étant raccordées à leur extrémités latérales par deux platines latérales, et entre celles-ci par plusieurs tubes de protection s'étendant chacun dans un plan sensiblement vertical.

D'autres caractéristiques avantageuses de l'invention sont définies ci-après.

Les platines latérales sont sensiblement horizontales, et sont inclinées d'environ 45° par rapport à la direction longitudinale du véhicule, de façon à se rapprocher à leur extrémité avant, ces platines latérales s'appuyant sur des parties de structure du plancher arrière ayant la forme générale d'équerres adjacentes à la traverse centrale et à un longeron arrière correspondant.

La barrière de protection comprend au moins trois tubes de protection, dont deux au moins sont recouverts par une plaque d'appui disposée en vis-à-vis de la roue de secours, au regard de la direction transversale du véhicule, la plaque d'appui se prolongeant par une extension située en dessous de la barre arrière et étant encadrée par une zone tubulaire inférieure fixée à une partie basse au plancher arrière.

La barrière de protection est conformée de façon à présenter une forme générale en coude suivant une vue parallèle à la direction transversale du véhicule, une partie avancée et haute du coude étant constituée par la barre avant et une partie arrière et basse étant constituée par la barre arrière, les tubes de protection ayant une forme cintrée correspondant à ce coude.

Le véhicule comprend un tube de protection décalé suivant la direction transversale par rapport aux tubes de protection adjacents à la plaque d'appui, ce tube de protection décalé s'étendant vers l'arrière du véhicule au-delà des autres tubes de protection.

L'invention sera mieux comprise à la lecture de la description suivante d'un exemple non limitatif de l'invention, et à la lumière des dessins annexés.
[Fig. 1] représente une vue en perspective d'une partie arrière d'un véhicule automobile selon l'invention, limité à la zone soubassement, et respectivement sans et avec une roue de secours.
[Fig. 2] représente une vue en perspective d'une partie arrière d'un véhicule automobile selon l'invention, limité à la zone soubassement, et respectivement sans et avec une roue de secours.
[Fig. 3] représente une barrière de protection d'un véhicule des figures 1 et 2.
[Fig. 4] est une vue suivant un plan de coupe XZ de la zone du véhicule automobile de la figure 2.
[Fig. 5] représente des vues de la partie avant de la zone du véhicule des figures 1 et 2, avant montage de la barrière de protection.
[Fig. 6] représente des vues de la partie avant de la zone du véhicule des figures 1 et 2, après montage de la barrière de protection.
[Fig. 7] représente une autre vue en perspective avec un plan de coupe YZ de la zone du véhicule de la figure 6 traversant une partie arrière de la barrière de protection.
[Fig. 8] représente une vue de la zone du véhicule des figures 5 à 7, suivant un plan de coupe XZ traversant la barrière de protection.

Dans la description, les directions et orientations sont données en référence à un repère orthonormé direct classiquement utilisé en conception automobile, dans lequel X désigne la direction longitudinale avant - arrière du véhicule, pointant vers l'arrière du véhicule, Y est la direction transversale au véhicule pointant vers la droite du véhicule, et Z est la direction verticale, pointant vers le haut.

Les notions « avant » et « arrière » sont données en référence au sens de marche normal, vers l'avant du véhicule.

L'expression « sensiblement » signifie qu'un léger écart est admis dans le cadre de l'invention par rapport à une valeur nominale déterminée. Par exemple « sensiblement vertical » signifie qu'une inclinaison de l'ordre de 10° par rapport à un direction strictement verticale est admise dans le périmètre de l'invention.

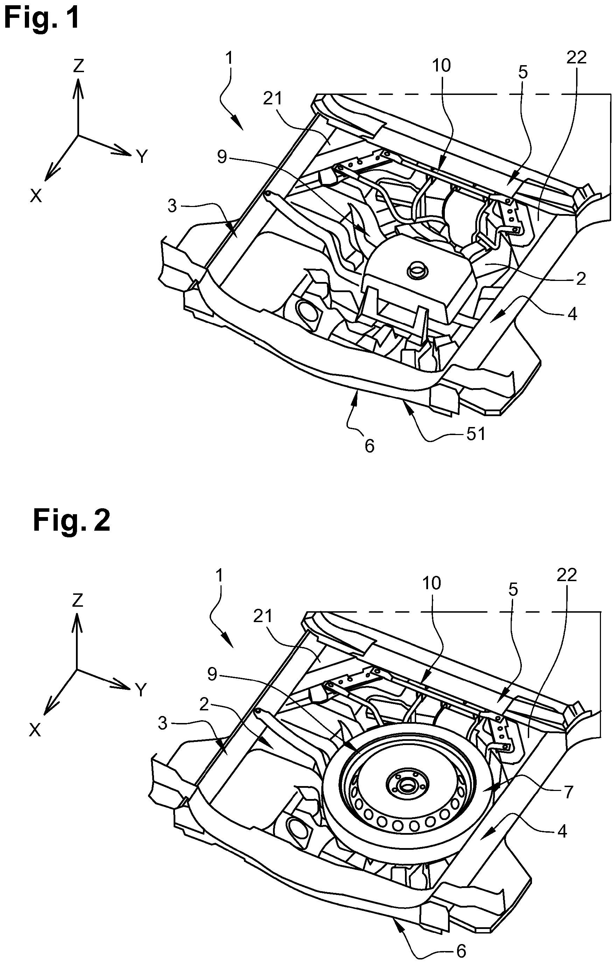

On a représenté aux figures 1 et 2 la partie arrière d'un véhicule automobile 1, limitée à sa zone soubassement. Ce véhicule comprend un plancher arrière 2, réalisé ici en matériau plastique ou composite, par exemple en SMC (en anglais « Sheet Molding Compound »). Ce plancher 2 est supporté latéralement par deux longerons arrière gauche 3 et droit 4 s'étendant sensiblement suivant la direction longitudinale X. A l'avant le plancher 2 est supporté par une traverse centrale 5 s'étendant suivant la direction transversale Y du véhicule. Le plancher 2 est en outre fixé dans sa partie arrière à une traverse arrière 6 s'étendant suivant la direction transversale Y du véhicule.

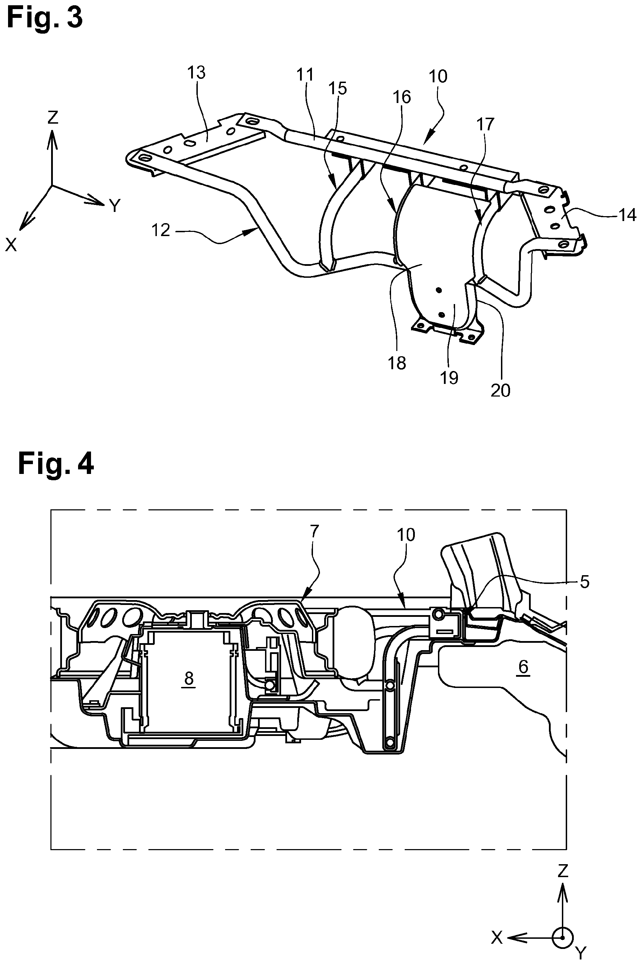

Comme représenté à la figure 4, le véhicule comprend un réservoir à carburant 6 qui est situé à l'avant du plancher arrière 2 et de la traverse centrale 5.

Le véhicule comprend encore une roue de secours qui est situé au-dessus du plancher arrière 2 à une hauteur présentant une zone de recouvrement avec la hauteur d'une zone arrière du réservoir 6.

En effet dans l'exemple illustré, des contraintes d'architecture et d'implantation ont amené à installer une batterie 8 de servitude 12v (figure 4) dans un renfoncement 9 conformé sur le plancher arrière 2. Ce renfoncement 9 a la forme générale d'une cuvette.

Lorsque le véhicule prévoit en option une roue de secours 7 ou galette, celle-ci est ici implantée au-dessus de la batterie 8, de façon sensiblement horizontale, ce qui la place relativement haute dans le véhicule comme indiqué précédemment. On note que la roue est disposée de façon que la partie creuse de la jante soit tournée vers le bas, de façon à accueillir la forme protubérante de la batterie 8 et de ses accessoires (carter etc.).

La zone de recouvrement est considérée suivant la direction verticale Z. Dans l'exemple illustré (figure 4), la moitié inférieure de la hauteur de la roue est situé en vis-à-vis de la partie arrière du réservoir 6. On comprend alors qu'en cas de choc arrière sur le véhicule, la roue de secours 7 peut s'avancer en direction du réservoir. Pour protéger ce dernier, le véhicule selon l'invention comprend une barrière de protection 10 fixée sur la structure du soubassement et sur le plancher arrière 2. Cette barrière de protection 10 est au moins en partie intercalée entre la roue de secours 7 et la zone arrière du réservoir 6 à carburant. Cette barrière de protection 10 est ainsi disposée pour limiter le déplacement longitudinal de la roue de secours 7 et donc tout risque d'impact avec le réservoir à carburant 6. La forme de la barrière 10 est définie de façon à assurer une cinématique de déformation qui évite tout risque d'intrusion de la roue de secours 7 dans l'espace de sécurité du réservoir à carburant 6, ce qui permet de respecter les contraintes réglementaires.

La barrière de protection 10 est réalisée en tubes métalliques mécano-soudés (figure 3, 4 et 6-8). Elle comprend une barre avant 11 ainsi qu'une barre arrière 12. Celles-ci s'étendent chacune essentiellement suivant la direction transversale Y du véhicule. La barre avant 11 est globalement rectiligne et prend appui sur la traverse centrale 5 de soubassement qui fait partie de la structure du soubassement. La barre arrière 12 présente une forme plus complexe avec des cintrages et pénètre au moins en partie dans le renfoncement 9 du plancher arrière 2 en épousant une paroi avant de ce dernier. La barre avant 11 et la barre arrière 12 sont raccordées d'une part à leurs extrémités latérales par deux platines latérales 13, 14, et d'autres part entre ces platines, par plusieurs tubes de protection 15-17 s'étendant chacun dans un plan sensiblement vertical.

La structure tubulaire de la barrière de protection est constituée de tubes en acier ayant une épaisseur de l'ordre de 2 mm.

Ces platines latérales 13, 14 sont formées de tôles pliées et soudées à la structure tubulaire. Elles permettent d'assurer des zones rigides tout en absorbant, par déformation, une grande partie de l'énergie générée à l'impact. Les fixations au véhicule sont présentes sur les parties latérales et reprennent des interfaces développées spécifiquement sur le soubassement.

Les platines latérales 13, 14 sont sensiblement horizontales, et inclinées d'environ 45° par rapport à la direction longitudinale X du véhicule.

L'inclinaison des platines est telle que les platines se rapprochent à leur extrémité avant. Les platines latérales 13, 14 s'appuient sur des parties de structure 21, 22 du plancher arrière ayant la forme générale d'équerres adjacentes à la traverse centrale 5 et à un longeron arrière 3, 4 correspondant. Ces équerres et les longerons arrière font partie de la structure du soubassement du véhicule.

La barrière de protection 10 comprend au moins trois tubes de protection 15-17. Au moins deux de ces tubes sont recouverts ou forment le support d'une plaque d'appui 18 disposée en vis-à-vis de la roue de secours 7, au regard de la direction transversale Y du véhicule. La plaque d'appui 18 se prolonge par une extension 19 située en dessous de la barre arrière 12. Cette extension 19 est encadrée par une zone tubulaire inférieure 20 solidaire de la barre arrière 12 et est fixée à une partie basse au plancher arrière 2 (figures 3 et 4). La fixation de l'extension est réalisée dans une partie inférieure de l'extension 19 et de la zone tubulaire inférieure 20, par vissage ou tout moyen équivalent, dans une zone inférieure du plancher 12, proche de la paroi latérale du renfoncement 9.

Comme illustré à la figure 4, la barrière de protection 10 est conformée de façon à présenter une forme générale en coude suivant une vue parallèle à la direction transversale Y du véhicule. Une partie avancée et haute du coude est constituée par la barre avant 11. Une partie arrière et basse du coude est constituée par la barre arrière 12. Les tubes de protection 15-17 ont une forme cintrée correspondant à ce coude.

L'un 15 des tubes de protection est en outre décalé suivant la direction transversale Y par rapport aux autres tubes de protection, typiquement ceux qui sont adjacents à la plaque d'appui 18. Ce tube de protection 15 est décalé en s'étendant vers l'arrière du véhicule au-delà des autres tubes de protection.

Un avantage de cette barrière de protection est de pouvoir être implantée sans de lourds aménagements de caisse ou de structure. L'implantation d'une telle barrière nécessite la création d'interfaces de fixation présentant un coût réduit. L'impact économique est donc très limité. Ces interfaces de fixations sont des pièces de liaison permettant la fixation des extrémités des barres avant 11 et arrière 12, et des platines adjacentes sur les éléments de structure du véhicule. Les fixations utilisent en outre des vis assurant la fixation de l'ensemble sur la structure du soubassement du véhicule.

De plus, cette configuration permet une meilleure gestion de la diversité produit sans devoir reconcevoir des zones importantes de la base roulante du véhicule et ce que ce soit avec ou sans roue de secours, selon l'option choisie sur le véhicule.

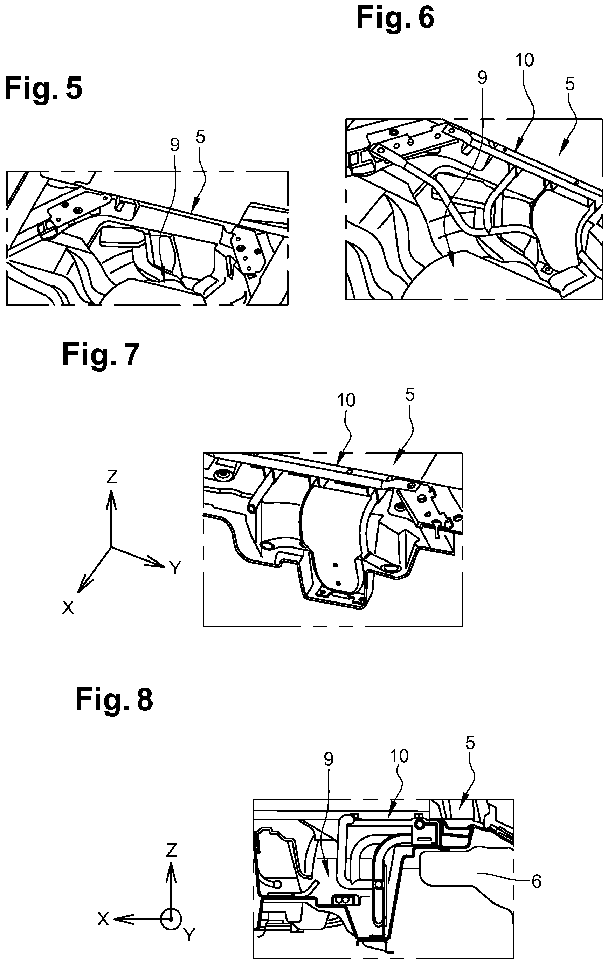

Cette invention permet également de protéger, en situation de choc arrière, un bornier d'interconnexions électriques fixé sur le plancher arrière (figure 6), en disposant ce bornier dans une zone protégée par la barrière.

Un autre avantage de cette invention est que la barrière de protection permet de reprendre une grande partie de l'impact « masse embarquée » dans le plancher arrière, partie arrière.

Par ses fixations inférieures, la barrière de protection apporte de la raideur au plancher arrière 2 en roulage véhicule, permettant ainsi de limiter les effets de « pompage » en roulage véhicule (efforts et déplacements dus aux inerties des éléments).

## Revendications

1. Véhicule automobile (1) comprenant un soubassement pourvu d'un plancher arrière (2), le véhicule comprenant également un réservoir (6) à carburant situé à l'avant du plancher arrière (2), une roue de secours (7) étant disposée au-dessus du plancher arrière (2) à une hauteur présentant une zone de recouvrement avec la hauteur d'une zone arrière du réservoir (6), le véhicule comprenant une barrière de protection (10) fixée sur la structure du soubassement et sur le plancher arrière (2) et au moins en partie intercalée entre la roue de secours (7) et la zone arrière du réservoir (6) à carburant, la roue de secours (7) étant disposée sensiblement à l'horizontale au-dessus d'un organe fonctionnel du véhicule, notamment une batterie (8) de servitude de type 12v ou équivalente, reposant sur une face supérieure du plancher arrière (2) le plancher arrière (2) étant constitué d'une coque en matériau plastique ou composite, notamment de type SMC (en anglais « Sheet Molding Compound ») supportée latéralement par deux longerons arrière (3, 4) latéraux du soubassement, lesquels s'étendent suivant la direction sensiblement longitudinale (X) du véhicule, la coque étant également supportée à l'avant par une traverse centrale (5) de soubassement, s'étendant suivant la direction transversale (Y) du véhicule, la coque comprenant un renfoncement central (9) ayant la forme générale d'une cuvette dans laquelle est logée la batterie (8), **caractérisé en ce que** la barrière de protection (10) est réalisée en tubes métalliques mécano-soudés, et comprend une barre avant (11) ainsi qu'une barre arrière (12) s'étendant chacune essentiellement suivant la direction transversale (Y) du véhicule, la barre avant (11) prenant appui sur la traverse centrale (5) de soubassement, tandis que la barre arrière (12) pénètre au moins en partie dans le renfoncement (9) et épouse une paroi avant de ce dernier, la barre avant (11) et la barre arrière (12) étant raccordées à leur extrémités latérales par deux platines latérales (13, 14), et entre celles-ci par plusieurs tubes de protection (15-17) s'étendant chacun dans un plan sensiblement vertical.

2. Véhicule selon la revendication 1, **caractérisé en ce que** les platines latérales (13, 14) sont sensiblement horizontales, et sont inclinées d'environ 45° par rapport à la direction longitudinale (X) du véhicule, de façon à se rapprocher à leur extrémité avant, ces platines latérales (13, 14) s'appuyant sur des parties de structure du plancher arrière ayant la forme générale d'équerres adjacentes à la traverse centrale (5) et à un longeron arrière (13, 14) correspondant.

3. Véhicule selon la revendication 1 ou 2, **caractérisé en ce que** la barrière de protection (10) comprend au moins trois tubes de protection (15-17), dont deux au moins sont recouverts par une plaque d'appui (18) disposée en vis-à-vis de la roue de secours (18), au regard de la direction transversale (Y) du véhicule, la plaque d'appui (18) se prolongeant par une extension (19) située en dessous de la barre arrière (12) et étant encadrée par une zone tubulaire inférieure (20) fixée à une partie basse au plancher arrière (2).

4. Véhicule selon l'une quelconque des revendications 1 à 3, **caractérisé en ce que** la barrière de protection (10) est conformée de façon à présenter une forme générale en coude suivant une vue parallèle à la direction transversale (Y) du véhicule, une partie avancée et haute du coude étant constituée par la barre avant (11) et une partie arrière et basse étant constituée par la barre arrière (12), les tubes de protection (15-17) ayant une forme cintrée correspondant à ce coude.

5. Véhicule selon la revendication 3 ou 4, **caractérisé en ce qu'**il comprend un tube de protection (15) décalé suivant la direction transversale (Y) par rapport aux tubes de protection adjacents (16-17) à la plaque d'appui (18), ce tube de protection (15) décalé s'étendant vers l'arrière du véhicule au-delà des autres tubes de protection.

## Patentansprüche

1. Kraftfahrzeug (1), umfassend einen Unterbau, der mit einem hinteren Boden (2) versehen ist, wobei das Fahrzeug außerdem einen Kraftstoffbehälter (6) umfasst, der sich vor dem hinteren Boden (2) befindet, wobei über dem hinteren Boden (2) in einer Höhe, die einen Überlappungsbereich mit der Höhe eines hinteren Bereichs des Behälters (6) aufweist, ein Reserverad (7) angeordnet ist, wobei das Fahrzeug eine Schutzbarriere (10) aufweist, die an der Unterbaustruktur und am hinteren Boden (2) befestigt und zumindest teilweise zwischen dem Reserverad (7) und dem hinteren Bereich des Kraftstoffbehälters (6) eingefügt ist, wobei das Reserverad (7) im Wesentlichen horizontal über einem funktionellen Organ des Fahrzeugs, insbesondere einer Versorgungsbatterie (8) vom Typ 12v oder gleichwertig, angeordnet ist, das auf einer Oberseite des hinteren Bodens (2) aufliegt, wobei der hintere Boden (2) aus einer Schale aus Kunststoff- oder Verbundmaterial, insbesondere vom Typ SMC (englisch: "Sheet Molding Compound"), gebildet ist, die seitlich von zwei seitlichen Längsträgern (3, 4) des Unterbaus, die sich im Wesentlichen in der Längsrichtung (X) des Fahrzeugs erstrecken, getragen wird, wobei die Schale außerdem von einem zentralen Querträger (5) des Unterbaus, der sich in der Querrichtung (Y) des Fahrzeugs erstreckt, getragen wird, wobei die Schale eine zentrale Vertiefung (9) mit der allgemeinen Form einer Mulde aufweist, in der die Batterie (8) untergebracht ist, **dadurch gekennzeichnet, dass** die Schutzbarriere (10) aus maschinengeschweißten Metallrohren ausgeführt ist und eine vordere Stange (11) und eine hintere Stange (12) umfasst, die sich jeweils im Wesentlichen entlang der Querrichtung (Y) des Fahrzeugs erstrecken, wobei die vordere Stange (11) auf dem zentralen Querträger (5) des Unterbaus aufliegt, während die hintere Stange (12) die Vertiefung (9) zumindest teilweise durchdringt und an einer Vorderwand derselben anliegt, wobei die vordere Stange (11) und die hintere Stange (12) an ihren seitlichen Enden durch zwei seitliche Platten (13, 14) und zwischen diesen durch mehrere Schutzrohre (15 - 17), die sich jeweils in einer im Wesentlichen vertikalen Ebene erstrecken, verbunden sind.

2. Fahrzeug nach Anspruch 1, **dadurch gekennzeichnet, dass** die seitlichen Platten (13, 14) im Wesentlichen horizontal sind und um etwa 45° zur Längsrichtung (X) des Fahrzeugs geneigt sind, sodass sie sich an ihrem vorderen Ende annähern , wobei die seitlichen Platten (13, 14) auf Strukturteilen des hinteren Bodens mit der allgemeinen Form von Winkeln, die an den zentralen Querträger (5) und an einen entsprechenden hinteren Längsträger (13, 14) angrenzen, aufliegen.

3. Fahrzeug nach Anspruch 1 oder 2, **dadurch gekennzeichnet, dass** die Schutzbarriere (10) mindestens drei Schutzrohre (15 - 17) umfasst, von denen mindestens zwei durch eine Stützplatte (18) bedeckt sind, die in Bezug auf die Querrichtung (Y) des Fahrzeugs gegenüber dem Reserverad (18) angeordnet ist, wobei die Stützplatte (18) durch eine Erweiterung (19) verlängert wird, die sich unterhalb der hinteren Stange (12) befindet und von einem unteren rohrförmigen Bereich (20), der an einem unteren Teil am hinteren Boden (2) befestigt ist, umrahmt ist.

4. Fahrzeug nach einem der Ansprüche 1 bis 3, **dadurch gekennzeichnet, dass** die Schutzbarriere (10) so geformt ist, dass sie in einer Ansicht parallel zur Querrichtung (Y) des Fahrzeugs eine allgemeine Bogenform aufweist, wobei ein vorderer und oberer Teil des Bogens durch die vordere Stange (11) gebildet ist und ein hinterer und unterer Teil durch die hintere Stange (12) gebildet ist, wobei die Schutzrohre (15 - 17) eine diesem Bogen entsprechende gekrümmte Form aufweisen.

5. Fahrzeug nach Anspruch 3 oder 4, **dadurch gekennzeichnet, dass** es ein Schutzrohr (15) umfasst, das in Querrichtung (Y) in Bezug auf die benachbarten Schutzrohre (16 - 17) an der Stützplatte (18) versetzt ist, wobei sich das versetzte Schutzrohr (15) über die anderen Schutzrohre hinaus zum Heck des Fahrzeugs erstreckt.

## Claims

1. Motor vehicle (1) comprising an understructure provided with a rear floor (2), the vehicle also comprising a fuel tank (6) situated at the front of the rear floor (2), a spare wheel (7) being disposed above the rear floor (2) at a height having a zone of overlap with the height of a rear zone of the tank (6), the vehicle comprising a protective barrier (10) fastened to the structure of the understructure and to the rear floor (2) and at least partially interposed between the spare wheel (7) and the rear zone of the fuel tank (6), the spare wheel (7) being disposed substantially horizontally above a functional member of the vehicle, in particular a service battery (8) of the 12V or equivalent type, resting on an upper face of the rear floor (2), the rear floor (2) being constituted of a shell made of plastic or composite material, in particular of SMC (Sheet Moulding Compound) type, supported laterally by two rear lateral side members (3, 4) of the understructure, which extend in the substantially longitudinal direction (X) of the vehicle, the shell also being supported at the front by a central understructure crossmember (5), extending in the transverse direction (Y) of the vehicle, the shell comprising a central indentation (9) having the overall shape of a bowl in which the battery (8) is housed, **characterized in that** the protective barrier (10) is made from mechanically welded metal tubes, and comprises a front bar (11) and also a rear bar (12) that each extend substantially in the transverse direction (Y) of the vehicle, the front bar (11) bearing on the central understructure crossmember (5), while the rear bar (12) at least partially enters the indentation (9) and conforms to a front wall of the latter, the front bar (11) and the rear bar (12) being connected at their lateral ends by two lateral mounting plates (13, 14), and between these by a plurality of protective tubes (15-17) that each extend in a substantially vertical plane.

2. Vehicle according to Claim 1, **characterized in that** the lateral mounting plates (13, 14) are substantially horizontal, and are inclined by approximately 45° with respect to the longitudinal direction (X) of the vehicle, so as to be close together at their front end, these lateral mounting plates (13, 14) bearing on structural parts of the rear floor that have the overall shape of brackets adjacent to the central crossmember (5) and to a corresponding rear side member (13, 14).

3. Vehicle according to Claim 1 or 2, **characterized in that** the protective barrier (10) comprises at least three protective tubes (15-17), of which at least two are covered by a bearing plate (18) disposed facing the spare wheel (18), in relation to the transverse direction (Y) of the vehicle, the bearing plate (18) being extended by an extension (19) situated beneath the rear bar (12) and being surrounded by a lower tubular zone (20) fastened at a bottom part to the rear floor (2).

4. Vehicle according to any one of Claims 1 to 3, **characterized in that** the protective barrier (10) is shaped so as to have an elbow-shaped overall shape in a view parallel to the transverse direction (Y) of the vehicle, a top and forward part of the elbow being constituted by the front bar (11) and a bottom and rear part being constituted by the rear bar (12), the protective tubes (15-17) having a bent shape that corresponds to this elbow.

5. Vehicle according to Claim 3 or 4, **characterized in that** it comprises a protective tube (15) that is offset in the transverse direction (Y) with respect to the protective tubes (16-17) that are adjacent to the bearing plate (18), this offset protective tube (15) extending towards the rear of the vehicle beyond the other protective tubes.
